# EUROPEAN PATENT APPLICATION

(11) **EP 4 753 268 A1**
(43) Date of publication of application: **03.06.2026**
(21) Application number: 24844818.5
(22) Date of filing: 24.07.2024
(51) Int. Cl.: H04N 21/2187

(54) **SPECIAL EFFECT PROCESSING METHOD AND APPARATUS, DEVICE, AND STORAGE MEDIUM**

(30) Priority: 24.07.2023 CN 202310914108
(71) Applicant: Beijing Zitiao Network Technology Co., Ltd., Beijing 100190 (CN)
(72) Inventor: WU, Xuekai, Beijing 100028 (CN); TANG, Liwei, Beijing 100028 (CN); WU, Xuheng, Beijing 100028 (CN); WANG, Yehong, Beijing 100028 (CN); SHEN, Xiaoyu, Beijing 100028 (CN)
(74) Representative: Isarpatent
(86) International application number: PCT/CN2024/107400
(87) International publication number: WO 2025/021128

(57) **Abstract**

According to embodiments of the present disclosure, a method, an apparatus, a device and a computer readable storage medium for effect processing are provided. **In** the method of effect processing, a live streaming interface is presented, and the live streaming interface presents at least part of a live streaming image associated with a live streaming party. **In** response to a selection of a target effect by the live streaming party, a preview image is presented, and the preview image is generated by applying the target effect to the live streaming image. **In** accordance with that a first predetermined operation is received, the target effect is applied to the live streaming image. **In** this way, the preview for the effect can be provided in the live streaming process, so that the live streaming party can better decide whether to apply the selected effect, and the occurrence of misoperation can also be avoided.

## Description

**This** application claims the benefit of Chinese Patent Application No. 202310914108.0, filed July 24, 2023, entitled "METHOD, APPARATUS, DEVICE AND STORAGE MEDIUM FOR EFFECT PROCESSING", the entirety of which is incorporated herein by reference.

### FIELD

Example embodiments of the present disclosure generally relate to the field of computers, and in particular, to a method, an apparatus, a device and a computer readable storage medium for effect processing.

### BACKGROUND

With the continuous increase of network bandwidth and computing power, the live streaming platform has the capability of applying effects in real time. These effects may include visual effects and audio effects and the like. By fusing these elements into the live streaming image, richer and live content can be presented to the audience.

### SUMMARY

**In** a first aspect of the present disclosure, a method of effect processing is provided. The method includes: presenting a live streaming interface, the live streaming interface presenting at least part of a live streaming image associated with a live streaming party; presenting a preview image in response to a selection of a target effect by the live streaming party, the preview image being generated by applying the target effect to the live streaming image; and applying the target effect to the live streaming image in accordance with that a first predetermined operation is received.

**In** a second aspect of the present disclosure, an apparatus for effect processing is provided. The apparatus includes a live streaming interface presentation module, configured to present a live streaming interface, the live streaming interface presenting at least part of a live streaming image associated with a live streaming party; a preview image presentation module, configured to present a preview image in response to a selection of a target effect by the live streaming party, the preview image being generated by applying the target effect to the live streaming image; and a target effect application module, configured to apply the target effect to the live streaming image in accordance with that a first predetermined operation is received.

In a third aspect of the present disclosure, there is provided an electronic device. The device includes at least one processor; and at least one memory coupled to the at least one processor and storing instructions executable by the at least one processor. The instructions, when executed by the at least one processor, cause the device to perform the method of the first aspect.

In a fourth aspect of the present disclosure, there is provided a computer readable storage medium having stored thereon a computer program executable by a processor to implement the method of the first aspect.

It should be understood that the content described in the SUMMARY section is neither intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of embodiments of the present disclosure will become more apparent with reference to the following DETAILED DESCRIPTION taken in conjunction with the accompanying drawings. In the drawings, the same or similar reference numerals represent the same or similar elements, where:
FIG. 1 illustrates a schematic diagram of an example environment in which embodiments of the present disclosure can be implemented;
FIG. 2A to FIG. 2C illustrate schematic diagrams of multiple examples of a live streaming interface according to some embodiments of the present disclosure;
FIG. 3 illustrates a flowchart of a method of effect processing according to some embodiments of the present disclosure;
FIG. 4 illustrates a block diagram of an apparatus for effect processing according to some embodiments of the present disclosure; and
FIG. 5 illustrates a block diagram of a device capable of implementing various embodiments of the present disclosure.

### DETAILED DESCRIPTION

It can be understood that, before using the technical solutions disclosed in the embodiments of the present disclosure, the user should be notified of the type, the use range, the use scenario, and the like of the personal information involved in the present disclosure and authorized by the user in an appropriate manner according to related laws and regulations.

For example, when an active request of a user is received, prompt information is sent to the user to explicitly prompt the user, and an operation requested to be performed by the user needs to acquire and use personal information of the user. Therefore, the user can autonomously select, according to the prompt information, whether to provide personal information to software or hardware such as an electronic device, an application, a server or a storage medium that performs the operations of the technical solutions of the present disclosure.

As an optional but non-limiting implementation manner, in response to receiving an active request of the user, a manner of sending prompt information to the user, for example, a manner of popping up a window, the pop-up window may present the prompt information in a text manner. In addition, the pop-up window may further carry a selection control for the user to select "agree" or "disagree" to provide personal information to the electronic device.

It should be understood that the foregoing process of notifying and acquiring user authorization is merely illustrative and does not constitute a limitation on the implementations of the present disclosure, and other manners that meet related laws and regulations may also be applied to the implementations of the present disclosure.

**It** can be understood that data (including but not limited to the data itself, the acquisition or use of the data) involved in this technical solution should comply with requirements of corresponding laws and regulations and related rules.

The term "in response to" as used herein represents a state in which a respective event occurs, or condition is satisfied. It will be appreciated that the timing of execution of a subsequent action performed in response to an event or condition is not necessarily strongly correlated with the time at which the event occurs, or the condition holds. For example, in some cases, the subsequent action may be performed immediately when the event occurs or the condition holds; while in other cases, the subsequent action may be performed after a period of time elapses after the event occurs or the condition holds.

The embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and embodiments of the present disclosure are only for illustrative purposes and are not intended to limit the scope of protection of the present disclosure.

It should be noted that titles of any section/subsection provided herein are not limiting. Various embodiments are described throughout this document, and any type of embodiment may be included under any section/subsection. Moreover, the embodiments described in any section/subsection may be combined in any manner with any other embodiments described in the same section/subsection and/or different section/subsection.

In the description of the embodiments of the present disclosure, the term "include" and similar terms should be understood as open inclusion, that is, "include but not limited to". The term "based on" should be understood as "at least partially based on". The term "an embodiment" or "the embodiment" should be understood as "at least one embodiment". The term "some embodiments" should be understood as "at least some embodiments". Other explicit and implicit definitions may also be included below. The terms first", "second", etc. may refer to different or the same objects. Other explicit and implicit definitions may also be included below.

As used herein, the term "model" may learn associations between respective inputs and outputs from training data such that corresponding outputs may be generated for a given input after training is complete. The generation of the model may be based on machine learning techniques. Deep learning is a machine learning algorithm that processes inputs and provides corresponding outputs by using a multi-layer processor. "Model" may also be referred to herein as a "machine learning model," "machine learning network," or "network," which terms are used interchangeably herein. A model may further include different types of processors or networks.

As used herein, a "unit," an "operating unit," or a "subunit" may be composed of a machine learning model or network of any suitable structure. As used herein, a set of elements or similar expressions may include one or more such elements. For example, "a set of convolution units" may include one or more convolution units.

As mentioned briefly above, in the live streaming process, applying an effect to the live streaming image may improve the experience of the audience, increase the attraction and entertainment, and acquire a better live streaming effect. However, the use process of effects is relatively simple. For example, in some applications, after the live streamer clicks an effect button in an interface, an effect may be directly applied to the live streaming image. Therefore, the live streamer cannot fully understand the actual effect of the effect before using the effect. Content risks may also be generated when misusing inappropriate effects. In addition, the audience may see the process of selecting the effect by the live streamer, which affects the impression of the live streaming content.

To this end, the embodiments of the present disclosure provide a solution for effect processing. According to various embodiments of the present disclosure, a live streaming interface is presented. The live streaming interface presents at least part of a live streaming image associated with a live streaming party. In response to a selection of a target effect by the live streaming party, a preview image is presented. The preview image is generated by applying the target effect to the live streaming image. If a first predetermined operation is received, the target effect is applied to the live streaming image. In this way, the preview for the effect may be provided in the live streaming process, so that the live streaming party may better decide whether to apply the selected effect, and the occurrence of misoperation may also be avoided. In addition, by providing the live streaming image and the preview image at the same time, the embodiments of the present disclosure may further enable the live streaming party to acquire the preview of the effect without affecting the live streaming.

Example embodiments of the present disclosure are described below with reference to the accompanying drawings.

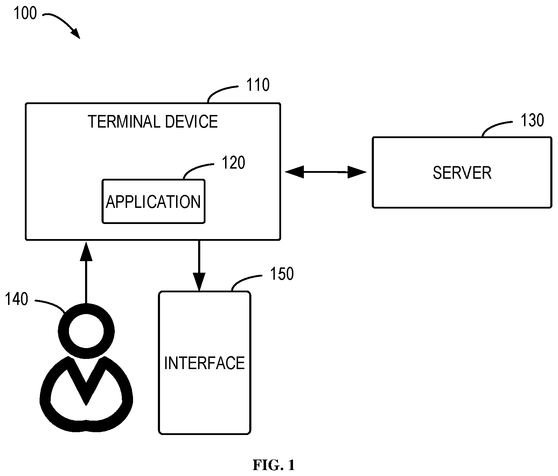

FIG. 1 illustrates a schematic diagram of an example environment 100 in which embodiments of the present disclosure can be implemented. In the environment 100, an application 120 is installed in a terminal device 110. A user 140 may interact with the application 120 via the terminal device 110 and / or an attachment device of the terminal device 110. The application 120 may be a play tool class application, a social class application, or any other suitable application. The application 120 may provide a live streaming service to the user 140. Such a user 140 may include a live streaming party, a viewing party, or the like of the live streaming room.

In the environment 100 of FIG. 1, if the application 120 is active, the terminal device 110 may present an interface 150 of the application 120. The interface 150 may include various interfaces that may be provided by the application 120, such as a live streaming interface, a live streaming management interface, and the like.

It should be understood that although the application 120 is shown as being included in the terminal device 110 in FIG. 1, the partial processing capability of the application 120 may also be based at least in part on a server 130.

In some embodiments, the terminal device 110 communicates with the server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems / servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

Some example embodiments of the present disclosure will be described below with continued reference to the accompanying drawings.

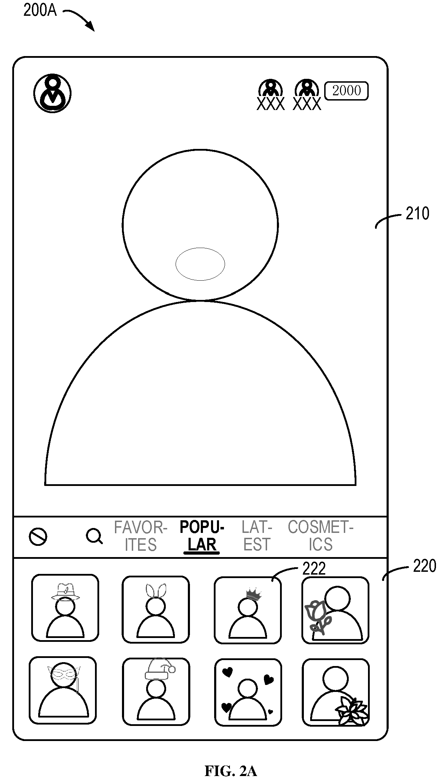

FIGS. 2A to 2C show schematic diagrams of examples 200A to 200C of a live streaming interface according to some embodiments of the present disclosure. The example interfaces 200A to 200C may be implemented at the terminal device 110. The example interfaces 200A to 200C are described below with reference to FIG. 1.

In the example of FIG. 2A, the terminal device 110 presents an interface 200A (also referred to as a live streaming interface). The interface 200A presents a live streaming image 210 associated with a live streaming party, such as a live streamer user. The interface 200A may present all live streaming image 210, or may only present a part of the live streaming image 210. In some embodiments, the interface 200A may also present an effect selection area 220. In this case, the interface 200A presents the effects selection area 220 and the part of the live streaming image 210 that is not occluded by the effect selection area 220.

In some embodiments, the effect selection area 220 is used to present a set of effects (also referred to as candidate effects). Such a set of effects is, for example, arranged in an icon style interface element, for example, a plurality of interface elements 222 arranged in an array. Such effects may include appropriate effects such as an image filter, a virtual scene, a beauty function, an animation effect, and an audio effect, and the present disclosure is not intended to limit a specific form of an effect.

Additionally, or alternatively, the effect selection area 220 may provide one or more of a search function, a selection function, and a collection function for a set of effects. In some embodiments, the effect selection area 220 includes an effect area and a label area. The effect area is used, for example, to display an interface element 222 corresponding to the effect. The label area is used, for example, to display an interface element such as a search button, a favorite button, or a classification label. Related effects may be found by clicking on the search button or the classification label. By clicking the favorite button, the relevant effect may be collected.

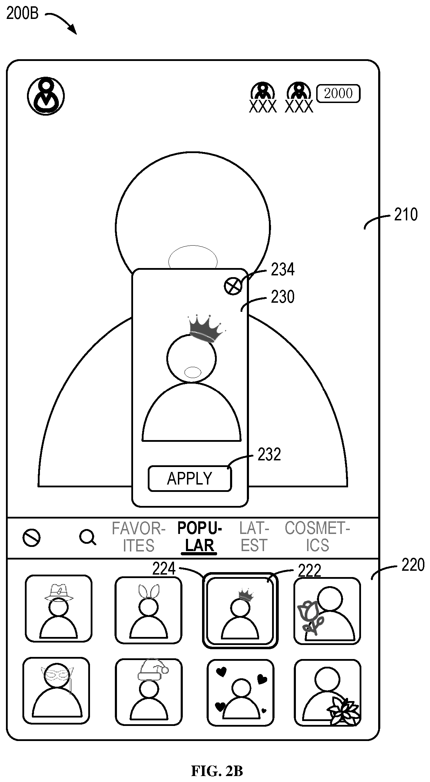

In the example of FIG. 2B, the terminal device 110 receives a selection of the effect by the live streaming party, and presents a preview image of the effect. Such a preview image is generated by applying the selected effect (also referred to as a target effect) to the live streaming image. For example, the terminal device 110 receives the selection of the interface element 222 by the live streaming party and correspondingly generates the preview image 230.

The terminal device 110 captures and generates the live streaming image 210 in the live streaming process, for example, by using a camera or another device. The live streaming image 210 may include, for example, a real-time video image.

In some embodiments, the preview image 230 and the live streaming image 210 may correspond to an effect version and a non-effect version of the same video source, and the effect version and the non-effect version may be aligned in a time sequence, for example. In some embodiments, the live streaming image 210 may include a specific object, for example, a live streamer object or a commodity object. Such a commodity object may be a commodity to be illustrated in a live streaming room.

Correspondingly, if the specific object has a predetermined action (for example, the live streamer object adjusts the posture or the live streamer object moves the position of the commodity object, etc.), such a predetermined action may be synchronously reflected in the live streaming image 210 and in the preview image 230.

Differently, the preview image 230 is visible only to the live streaming party. In contrast, the live streaming image 210 may be visible to users (e.g., audiences) within the live streaming room.

In some examples, the target effect may be applied to a particular object in the live streaming image 210. For example, the corresponding effect corresponding to the live streamer image may be triggered by detecting the posture of the live streamer object. Alternatively, a corresponding effect corresponding to the commodity object in the image may also be added.

In some embodiments, in order to facilitate the live streaming party to acquire the preview image of the effect without affecting the acquisition of the live streaming room information, a size of the generated preview image 230 may be smaller than the size of the live streaming image 210, for example.

In some embodiments, the preview image 230 may also be presented on the live streaming image 210 in a superimposed manner, so that the live streaming party may acquire the preview image 230 at the same time, and may also effectively acquire the real-time news of the live streaming room.

For example, the preview image 230 may be displayed in a centered position of the interface to occupy a visual focus.

In some embodiments, the preview image 230 may not be moved. For example, the preview image 230 is fixedly presented at a centered position on the live streaming image 210 and cannot be dragged.

In some embodiments, the target effect has a plurality of image effects corresponding to different conditions, and the terminal device 110 applies one of the image effects (also referred to as a target image effect) to the live streaming image, to generate the preview image 230. Such a target effect is also referred to as a package effect. Such conditions include, for example, limb movements, sound effects, and the like. If the terminal device 110 detects such a condition, the corresponding image effect may be switched to. In some embodiments, to save resources, the terminal device 110 may only present one of the image effects, for example, the first image effect, in the preview image 230.

As an example, the target effect has three image effects corresponding to three conditions, which are sequentially a first image effect corresponding to the hand raising, a second image effect corresponding to the OK gesture, and a third image effect corresponding to the blink action. The terminal device 110 receives the selection of the target effect by the live streaming party and only applies the first image effect in the preview image.

In some embodiments, the target effect has a plurality of image effects corresponding to different conditions, and the terminal device 110 sequentially applies the plurality of image effects to the live streaming image according to a predetermined time period to generate the preview image 230. In this way, a complete effect of the target effect may be presented.

Continuing with the above example, the target effect has three image effects corresponding to three conditions. The terminal device 110 receives a selection of the target effect by the live streaming party, and cyclically applies the first image effect, the second image effect, and the third image effect in a predetermined time period (for example, 3 seconds) in the preview image.

In some embodiments, the terminal device 110 presents the preview image 230 after the target effect is loaded. For example, some target effects may require more computing resources for rendering and processing. If the preview image is presented in real time during the processing, it may cause lag, delay, or overall performance degradation. In this way, performance and resource utilization may be optimized.

In some embodiments, the target effect has a plurality of image effects corresponding to different conditions, the terminal device 110 detects such condition, and applies a corresponding image effect to the live streaming image to generate the preview image 230. In this way, the effect when the target effect is triggered may be restored.

Continuing with the above example, the target effect has three image effects corresponding to three conditions. The terminal device 110 receives a selection of the target effect by the live streaming party and applies a static image effect by default. If the terminal device 110 detects an OK gesture, the terminal device 110 switches the statice image effect to the second image effect; if the terminal device 110 detects the blinking action, it switches the statice image effect to the third image effect.

In some embodiments, the preview image 230 is only visible to the live streaming party, so that the live streaming image presented to the audience is not affected. In this way, it is possible to avoid presenting the process of the live streaming party selecting special effects to the audience.

In some embodiments, the preview effect in the preview image 230 does not affect the effect already applied in the live streaming image 210. For example, referring to the interface 200B, it is assumed that the current effect applied in the live streaming image 210 is the live streamer wearing a Christmas hat. The terminal device 110 receives the selection of the interface element 222 by the live streaming party, and presents the preview image 230 in which the live streamer wears a crown. In this case, the live streaming image 210 and the preview image 230 correspond to different effects. In this way, it is convenient to compare the image effects corresponding to different effects.

In some embodiments, some effects may also include guidance information associated with guiding the presentation of the effects. For example, some effects may require a specific object (for example, a human body) in an image to perform a corresponding action to trigger a corresponding effect. Thus, corresponding guidance information may be presented to, for example, instruct the user to make a corresponding action. Conventionally, such guidance information needs to be presented in the preview image to guide the user to trigger a corresponding effect.

However, considering that the preview image 230 has a relatively small size, the terminal device 110 may present guidance information associated with the selected target effect outside the preview image 230. For example, the terminal device 110 may present the corresponding guidance information at the lower part of the preview image 230. Such guidance information may, for example, cease being presented upon detecting an effect trigger action.

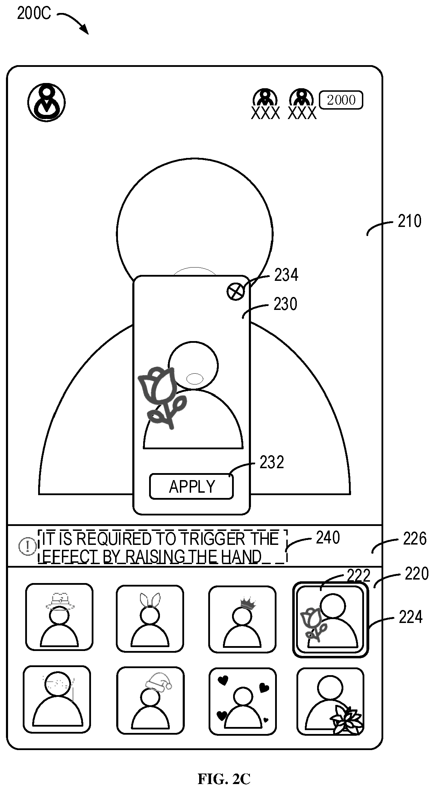

In some embodiments, as shown in FIG. 2C, the terminal device 110 may present, in the effect selection area 220, guidance information 240 corresponding to the selected effect. For example, the effect selection area 220 further includes a guidance information display area 226. The terminal device 110 receives the selection of the effect by the live streaming party and presents the guidance information 240 corresponding to the effect in the guidance information display area 226. The guide information display area 226 may be located at the upper, side, or lower part of the effect selection area 220, which is not limited in the present disclosure.

The interface related to the preview process of the effect is described above by using a plurality of embodiments. The terminal device 110 may receive the selection of the effect by the live streaming party, and present the corresponding preview image. The terminal device 110 may further apply the effect to the live streaming image upon receiving a predetermined operation (also referred to as a first predetermined operation) of the live streaming party. Such a first predetermined operation may include, for example, clicking a button, dragging an image, a long press, or a gesture. For example, the terminal device 110 receives the operation of long-pressing and dragging the preview image 230 by the live streaming party, and applies the effect corresponding to the interface element 222 to the live streaming image 210.

In some embodiments, the preview image 230 further includes an interface element 232, configured to receive a determining operation of the live streaming party. For example, in the examples of FIG. 2B and FIG. 2C, the terminal device 110 presents the interface element 232 in the preview image 230 in the form of a button. The terminal device 110 receives a click operation on the button by the live streaming party, ceases displaying the preview image 230, and applies the effect corresponding to the interface element 222 to the live streaming image 210.

In some embodiments, the terminal device 110 may cease presentation of the preview image if a predetermined operation (also referred to as a second predetermined operation) of the live streaming party is received. That is, the live streaming party may choose to abandon the selected effect. Accordingly, such an effect would not be applied to the live streaming image 210.

In some embodiments, the preview image 230 includes an interface element 234 for receiving a second predetermined operation of the live streaming party. For example, in the examples of FIG. 2B and FIG. 2C, the terminal device 110 presents the interface element 234 in the preview image 230 in the style of the icon. The terminal device 110 receives a click operation on the icon by the live streaming party and closes the preview image 230.

In some embodiments, an operation position of the second predetermined operation is outside the preview image 230. For example, the terminal device 110 receives a click of the live streaming party in the blank area in the effect preview area 220, and exits the preview image corresponding to the current effect. For another example, the terminal device 110 receives the selection of the interface element 222 corresponding to another effect by the live streaming party, exits the preview image corresponding to the current effect, and presents the preview image corresponding to another effect.

As an example, referring to the interface 200B, the terminal device 110 receives the selection of the interface element 222 by the live streaming party, and presents a preview image of the live streamer wearing a crown. Referring to the interface 200C, the terminal device 110 receives a selection of another interface element 222 by the live streaming party and presents a preview image of the live streamer handholding a rose.

The interaction process with the effect is described above by using multiple embodiments. If the terminal device 110 receives the interactive operation of the live streaming party (such as the operation of determining the effect, the operation of closing the effect, the operation of switching the effect, etc. ), the preview image 230 and the live streaming image 210 are synchronously presented in real time, that is, the process of applying or switching the effect does not affect the synchronization of the live streaming image.

In summary, according to various embodiments of the present disclosure, the preview for the effect may be provided in the live streaming process, so that the live streaming party may better decide whether to apply the selected effect, and the occurrence of misoperation may also be avoided.

### Example Processes

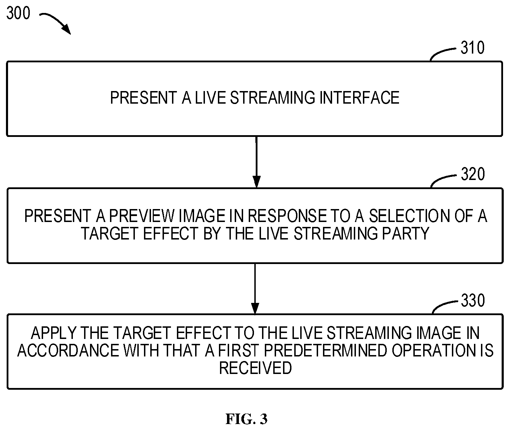

FIG. 3 shows a flowchart of a method 300 of effect processing according to some embodiments of the present disclosure. The method 300 may be implemented at the terminal device 110. The method 300 is described below with reference to FIG. 1.

At block 310, the terminal device 110 presents a live streaming interface. The live streaming interface presents at least part of a live streaming image associated with a live streaming party. At block 320, the terminal device 110 presents a preview image in response to a selection of a target effect by the live streaming party. The preview image is generated by applying the target effect to the live streaming image. At block 330, the terminal device 110 applies the target effect to the live streaming image in accordance with that a first predetermined operation is received.

In some embodiments, a size of the preview image is smaller than the live streaming image, and the preview image is presented superimposedly on the at least part of the live streaming image.

In some embodiments, the terminal device 110 presents guidance information outside the preview image in response to the target effect having the guidance information.

In some embodiments, the live streaming interface comprises an effect selection area for presenting a set of candidate effects, and the terminal device 110 presents, in the effect selection area, the guidance information corresponding to the target effect.

In some embodiments, the terminal device 110 applies, in response to the target effect having a plurality of image effects corresponding to different conditions, a target image effect of the plurality of image effects to the live streaming image, to generate the preview image.

In some embodiments, the terminal device 110 applies, in response to the target effect having a plurality of image effects corresponding to different conditions, the plurality of image effects sequentially to the live streaming image based on a predetermined time period, to generate the preview image.

In some embodiments, the terminal device 110 ceases presentation of the preview image in accordance with that a second predetermined operation is received, where the target effect is not applied to the live streaming image.

In some embodiments, an operation position of the second predetermined operation is outside the preview image.

### Example Apparatus and Device

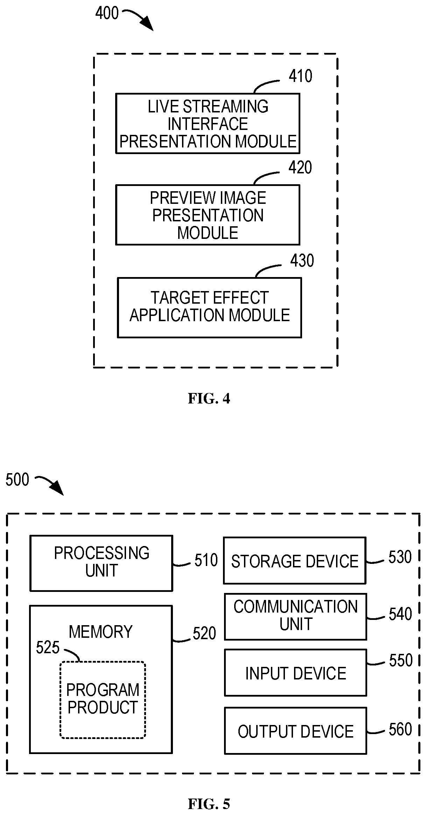

FIG. 4 is a schematic structural block diagram of an apparatus 400 for effect processing according to some embodiments of the present disclosure. The apparatus 400 may be implemented or included in the terminal device 110. The various modules / components in the apparatus 400 may be implemented by hardware, software, firmware, or any combination thereof.

As shown, the apparatus 400 includes a live streaming interface presentation module 410, configured to present a live streaming interface, the live streaming interface presenting at least part of a live streaming image associated with a live streaming party. The apparatus 400 further includes a preview image presentation module 420, configured to present a preview image in response to a selection of a target effect by the live streaming party, the preview image being generated by applying the target effect to the live streaming image. The apparatus 400 further includes a target effect application module 430, configured to apply the target effect to the live streaming image in accordance with that a first predetermined operation is received.

In some embodiments, a size of the preview image is smaller than the live streaming image, and the preview image is presented superimposedly on the at least part of the live streaming image.

In some embodiments, the apparatus 400 further includes a guidance information presentation module configured to present guidance information outside the preview image in response to the target effect having the guidance information.

In some embodiments, the live streaming interface comprises an effect selection area for presenting a set of candidate effects, and the guide information presentation module is further configured to present, in the effect selection area, the guidance information corresponding to the target effect.

In some embodiments, the apparatus 400 further includes a first image effect application module configured to apply, in response to the target effect having a plurality of image effects corresponding to different conditions, a target image effect of the plurality of image effects to the live streaming image, to generate the preview image.

In some embodiments, the apparatus 400 further includes a second image effect application module configured to apply, in response to the target effect having a plurality of image effects corresponding to different conditions, the plurality of image effects sequentially to the live streaming image based on a predetermined time period, to generate the preview image.

In some embodiments, the apparatus 400 further includes a ceasing presentation module configured to cease presentation of the preview image in accordance with that a second predetermined operation is received, where the target effect is not applied to the live streaming image.

In some embodiments, an operation position of the second predetermined operation is outside the preview image.

FIG. 5 illustrates a block diagram of an electronic device 500 in which one or more embodiments of the present disclosure may be implemented. It should be understood that the electronic device 500 shown in FIG. 5 is only an example and should not constitute any limitation on the functionality and scope of the embodiments described herein. The electronic device 500 as shown in FIG. 5 may be used to implement the terminal device 110 in FIG. 1.

As shown in FIG. 5, the electronic device 500 is in the form of a general computing device. The components of electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and can execute various processes based on the programs stored in the memory 520. In a multiprocessor system, multiple processing units execute computer executable instructions in parallel to improve the parallel processing capability of the electronic device 500.

The electronic device 500 typically includes multiple computer storage medium. Such medium may be any available medium that is accessible to the electronic device 500, including but not limited to volatile and non-volatile medium, removable and non-removable medium. The memory 520 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 530 may be any removable or non-removable medium, and may include a machine readable medium such as a flash drive, a disk, or any other medium, which may be used to store information and/or data (e.g., training data for training) and may be accessed within the electronic device 500.

The electronic device 500 may further include additional removable/non-removable, volatile/non-volatile storage medium. Although not shown in FIG. 5, a disk drive for reading from or writing to a removable, non-volatile disk (such as a "floppy disk"), and an optical disk drive for reading from or writing to a removable, non-volatile optical disk may be provided. In these cases, each driver may be connected to the bus (not shown) by one or more data medium interfaces. The memory 520 may include a computer program product 525, which has one or more program units configured to perform various methods or acts of various embodiments of the present disclosure.

The communication unit 540 communicates with a further electronic device through the communication medium. In addition, functions of components in the electronic device 500 may be implemented by a single computing cluster or multiple computing machines, which can communicate through a communication connection. Therefore, the electronic device 500 may be operated in a networking environment using a logical connection with one or more other servers, a network personal computer (PC), or another network node.

The input device 550 may be one or more input devices, such as a mouse, a keyboard, a trackball, etc. The output device 560 may be one or more output devices, such as a display, a speaker, a printer, etc. The electronic device 500 may also communicate with one or more external devices (not shown) through the communication unit 540 as required. The external device, such as a storage device, a display device, etc., communicate with one or more devices that enable users to interact with the electronic device 500, or communicate with any device (for example, a network card, a modem, etc.) that makes the electronic device 500 communicate with one or more other electronic devices. Such communication may be executed via an input/output (I/O) interface (not shown).

According to example implementation of the present disclosure, a computer readable storage medium is provided, on which computer executable instructions are stored, wherein the computer executable instructions are executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is an example, not exhaustive, and is not limited to the disclosed implementations. Without departing from the scope of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various embodiments disclosed herein.

## Claims

1. A method of effect processing, comprising:
presenting a live streaming interface, the live streaming interface presenting at least part of a live streaming image associated with a live streaming party;
presenting a preview image in response to a selection of a target effect by the live streaming party, the preview image being generated by applying the target effect to the live streaming image; and
applying the target effect to the live streaming image in accordance with that a first predetermined operation is received.

2. The method of claim 1, wherein a size of the preview image is smaller than the live streaming image, and the preview image is presented superimposedly on the at least part of the live streaming image.

3. The method of claim 1, further comprising:
presenting guidance information outside the preview image in response to the target effect having the guidance information.

4. The method of claim 3, wherein the live streaming interface comprises an effect selection area for presenting a set of candidate effects, and presenting the guide information outside the preview image comprises:
presenting, in the effect selection area, the guidance information corresponding to the target effect.

5. The method of claim 1, further comprising:
applying, in response to the target effect having a plurality of image effects corresponding to different conditions, a target image effect of the plurality of image effects to the live streaming image, to generate the preview image.

6. The method of claim 1, further comprising:
applying, in response to the target effect having a plurality of image effects corresponding to different conditions, the plurality of image effects sequentially to the live streaming image based on a predetermined time period, to generate the preview image.

7. The method of claim 1, further comprising:
ceasing presentation of the preview image in accordance with that a second predetermined operation is received, wherein the target effect is not applied to the live streaming image.

8. The method of claim 7, wherein an operation position of the second predetermined operation is outside the preview image.

9. An apparatus for effect processing, comprising:
a live streaming interface presentation module, configured to present a live streaming interface, the live streaming interface presenting at least part of a live streaming image associated with a live streaming party;
a preview image presentation module, configured to present a preview image in response to a selection of a target effect by the live streaming party, the preview image being generated by applying the target effect to the live streaming image; and
a target effect application module, configured to apply the target effect to the live streaming image in accordance with that a first predetermined operation is received.

10. An electronic device comprising:
at least one processor; and
at least one memory coupled to the at least one processor and storing instructions for execution by the at least one processor, the instructions, when executed by the at least one processor, causing the electronic device to perform the method according to any of claims 1 to 8.

11. A computer readable storage medium having stored thereon a computer program executable by a processor to implement the method according to any of claims 1 to 8.
